# EUROPÄISCHE PATENTSCHRIFT

(11) **EP 3 642 071 B1**
(45) Veröffentlichungstag und Bekanntmachung des Hinweises auf die Patenterteilung: **23.03.2022**
(21) Anmeldenummer: 18722490.2
(22) Anmeldetag: 03.05.2018
(51) Int. Cl.: B60L 53/57, B60L 53/65, B60L 53/66, B60L 53/68, G08G 1/00

(54) **VERFAHREN ZUM BETRIEB EINER VORRICHTUNG ZUM LADEN VON ENERGIESPEICHERN VON ELEKTRO- ODER HYBRIDFAHRZEUGEN**
METHOD FOR OPERATING A DEVICE FOR CHARGING AN ENERGY STORAGE OF ELECTRIC OR HYBRID VEHICLE
PROCÉDÉ DESTINÉ À FAIRE FONCTIONNER UN DISPOSITIF DE RECHARGE D'UN ACCUMULATEUR D'ENERGIE D'UN VEHICULE ELECTRIQUE OU HYBRIDE

(30) Priorität: 22.06.2017 DE 102017210566
(43) Veröffentlichungstag der Anmeldung: 29.04.2020
(73) Patentinhaber: Robert Bosch GmbH, 70442 Stuttgart (DE)
(72) Erfinder: LEEGE, Holger, 71229 Leonberg (DE); NONNENMACHER, Achim, 70197 Stuttgart (DE); RANDOLL, Helmut, 71665Vaihingen (DE)
(86) Internationale Anmeldenummer: PCT/EP2018/061325
(87) Internationale Veröffentlichungsnummer: WO 2018/233918

(56) Entgegenhaltungen:
- DE-A1-102009 028 565
- US-A1- 2016 129 793
- US-A1- 2017 136 890

## Beschreibung

Die vorliegende Erfindung betrifft ein Verfahren zum Betrieb einer Vorrichtung zum Laden von Energiespeichern von Elektro- oder Hybridfahrzeugen

### Stand der Technik

Elektrofahrzeuge verfügen üblicherweise über einen elektrischen Energiespeicher, beispielsweise eine Traktionsbatterie, die die elektrische Energie für den Antrieb bereitstellt. Ist dieser elektrische Energiespeicher ganz oder teilweise entladen, so muss das Elektrofahrzeug eine Ladestation ansteuern, an der der Energiespeicher wieder aufgeladen werden kann. Bisher ist es hierzu üblich, dass an einer solchen Ladestation das Elektrofahrzeug mittels einer Kabelverbindung an die Ladestation angeschlossen wird. Diese Verbindung muss nachteilig von einem Benutzer üblicherweise manuell hergestellt werden. Dabei ist es auch erforderlich, dass Ladestation und Elektrofahrzeug ein zueinander korrespondierendes Verbindungssystem aufweisen.

Ferner sind vereinzelt auch kabellose Ladesysteme für Elektrofahrzeuge bekannt.

Beim induktiven Laden der Elektrofahrzeuge sind im oder auf dem Boden eine oder mehrere Spulen (Sendespulen) verbaut. Weiterhin sind im Elektrofahrzeug ebenfalls eine oder mehrere Spulen (Empfangsspule) angeordnet. Wird ein Elektrofahrzeug über der Sendespule abgestellt, sendet diese ein magnetisches Wechselfeld aus. Das magnetische Wechselfeld wird von der Empfangsspule innerhalb des Fahrzeugs aufgenommen und in elektrische Energie umgewandelt. Mittels dieser elektrischen Energie kann daraufhin durch die kontaktlose Energieübertragung eine Traktionsbatterie des Fahrzeugs geladen werden. Weiterhin kann der Energiespeicher des Elektrofahrzeugs auch zur Rückspeisung verwendet werden. Hierzu kann gegebenenfalls eine Kabelverbindung oder auch eine induktive Leistungsübertragung verwendet werden.

Die Druckschrift DE102011010049 A1 offenbart ein solches System zum Laden einer Fahrzeugbatterie, bei dem die Energie induktiv übertragen wird. Nachteilig am Stand der Technik ist, dass das sowohl kabelgebundene als auch kabellose Ladeverfahren lediglich dazu genutzt werden, Traktionsbatterien des jeweiligen Fahrzeugs aufzuladen. Einige Verfahren beinhalten zusätzliche Funktionalitäten wie beispielsweise Abrechnungsverfahren, durch die der Batterie zugeführte Ladungsmenge dem Fahrer in Rechnung gestellt wird. Weiterhin ist am Stand der Technik nachteilig, dass Fahrzeuge entweder nur kabelgebunden oder induktiv von lokal fest verbauten Ladestationen geladen werden können, die selektiv vom Fahrer angefahren werden müssen. Bleibt ein Fahrzeug hingegen aufgrund einer leeren Traktionsbatterie liegen, ist es nicht mehr in der Lage, eine Ladestation anzufahren und die Batterie aufzuladen. Es müsste umständlich abgeschleppt werden.

Es ist anzunehmen, dass bei zunehmender Verbreitung der Elektromobilität in einigen Jahren weltweit jährlich mehrere Millionen Fahrzeuge mit leeren Batterien liegenbleiben. Diese Einschätzung basiert auf Studien des ADAC, die besagen, dass allein in Deutschland pro Jahr ca. eine Viertel Million Fahrzeuge ohne Kraftstoff liegen blieben. Entsprechend ist annehmbar, dass sich eine ähnliche Zahl auch bei Elektromobilen zeigen wird.

Es besteht daher ein Bedarf nach einem Verfahren, durch das auf das Abschleppen eines Fahrzeugs mit leerer Batterie verzichtet werden kann.

### Offenbarung der Erfindung

Das erfindungsgemäße Verfahren mit dem Kennzeichen des Anspruchs 1 hat die Vorteile, dass ein Abschleppen eines Fahrzeugs mit leerer Traktionsbatterie unnötig ist.

Erfindungsgemäß ist dazu ein Verfahren zum Betrieb einer Ladevorrichtung zum Laden von Energiespeichern von Fahrzeugen, vorzugweise Elektro- oder Hybridfahrzeuge, vorgesehen, wobei die Vorrichtung mit einem internetfähigen Server verbunden ist. Mindestens ein Empfänger-Fahrzeug mit einer leeren bzw. teilweise geladenen Batterie teilt in einem Verfahrensschritt seinen Lade-Bedarf der Vorrichtung mit. Weiterhin teilt mindestens ein Spender-Fahrzeug mit zumindest teilweise geladener Batterie in einem Verfahrensschritt seine Lade-Bereitschaft der Vorrichtung mit. Das Verfahren ermöglicht im Falle einer leeren Batterie eines Empfänger-Fahrzeugs (liegen gebliebenes Fahrzeug mit leerer Batterie bzw. Fahrzeug mit teilweise geladener Batterie, welches voraussichtlich nicht mehr die nächste oder gewünschte Ladestation erreicht) das schnelle Finden eines beliebigen Spende-Fahrzeugs, das über eine wenigstens teilweise aufgeladene Batterie verfügt und somit einen Teil seiner Batterieladung an das Empfänger-Fahrzeug übertragen kann. Entsprechend kann jedes Elektro- bzw. Hybrid-Fahrzeug quasi als "Pannendienst" agieren. Dies ist insofern zusätzlich vorteilhaft, dass die Anzahl der privat genutzten Fahrzeuge die Anzahl der verfügbaren Pannendienstfahrzeuge im Alltagsverkehr deutlich übersteigt. Entsprechend erhält ein liegen gebliebenes Empfänger-Fahrzeug deutlich schneller Hilfe als wenn es beispielsweise auf einen professionellen Pannendienst warten muss, bei dem die Wartezeiten teilweise bei mindestens 45 Minuten liegen.

Durch die in den abhängigen Ansprüchen genannten Maßnahmen sind vorteilhafte Weiterbildungen des in dem unabhängigen Anspruch angegebenen Verfahrens möglich.

Das Empfänger-Fahrzeug und das Spender-Fahrzeug kommunizieren über das Internet mit dem internetfähigen Server der Vorrichtung.

Elektro- und Hybridfahrzeuge verfügen heutzutage über eine Internetanbindung und sind somit in der Lage nicht nur mit dem Internet an sich sondern auch untereinander zu kommunizieren. Entsprechend kann sowohl der Ladebedarf als auch die Ladebereitschaft anhand einer Internetverbindung mit dem internetfähigen Server kommuniziert werden. Es entsteht somit ein "connected service" durch die Vernetzung der einzelnen Fahrzeuge miteinander, wobei die erfindungsgemäße Vorrichtung die Verbindung untereinander ermöglicht.

Der internetfähige Server verfügt über einen Cloud-Service, eine Cloud bzw. über Cloud Computing. Hierdurch wird vorteilhafterweise die IT-Infrastruktur über den internetfähigen Server der Vorrichtung zur Verfügung gestellt, ohne dass diese im jeweiligen Empfänger- oder Spender-Fahrzeug vorhanden installiert sein muss. Entsprechend ermöglicht die Cloud u.a. Kostenvorteile gegenüber konventionellen Systemen. Bei Nutzung von Cloud Services lässt sich die genutzte Kapazität variabel an den tatsächlichen Bedarf kurzfristig anpassen. Das gilt besonders bei Geschäftsfelder, die externen Anforderungen umgehend entsprechen müssen, wie beispielsweise die Logistik, wie bei dem erfindungsgemäßen Verfahren der Fall. Ständig schwankende Volumina wie die variierende Anzahl liegengebliebener Fahrzeuge erfordern zeitnahes Reagieren und die durchgehende Verfügbarkeit der zur Ausführung benötigten Kapazitäten. Dank der Flexibilität und der Skalierbarkeit der Cloud wäre die Bereitstellung benötigter Ressourcen für logistische Software wesentlich günstiger und einfacher zu bewerkstelligen, als es momentan mit statischen Systemen der Fall ist.

Weiterhin ist vorteilhaft, dass sowohl Empfänger-Fahrzeug als auch Spender-Fahrzeug ihre Position an die Vorrichtung übermitteln. Empfänger- und Spender-Fahrzeug verfügen über GPS und können somit Ihre Position lokalisieren. Diese Position wird an die Vorrichtung unter Zuhilfenahme des internetfähigen Servers übermittelt. Entsprechend kennt die Vorrichtung die Positionen der Empfänger- und Spender-Fahrzeuge und kann das am nächsten gelegene Spender-Fahrzeug auswählen, um zum Empfänger-Fahrzeug zu fahren.

Vorteilhafterweise übermitteln Empfänger-Fahrzeug und Spender-Fahrzeug die Ladefähigkeit an die Vorrichtung.

Zur Übermittelung der Ladefähigkeit gehören Informationen wie z.B. der Steckertyp der jeweiligen Fahrzeuge. Dies hilft bei der Auswahl des für das Empfänger-Fahrzeug geeigneten Spender-Fahrzeuges. Es werden nur Fahrzeuge "gepaart" - also für das gegenseitige Laden ausgewählt - die miteinander kompatibel sind, also auch geeignete Steckertypen bereitstellen können.

Weiterhin übermitteln Empfänger-Fahrzeug und Spender-Fahrzeug den Hersteller bzw. Fahrzeugtyp an die Vorrichtung.

Elektrofahrzeuge verfügten je nach Hersteller bzw. Fahrzeugtyp über unterschiedliche Charakteristika. Beispielsweise kann die Hochvolt-Spannung (AC/DC), welche das Fahrzeug abgeben kann je nach Fahrzeug unterschiedlich ausfallen, was die Kompatibilität des Empfänger- und des Spender-Fahrzeugs einschränkt.

Um die Auswahl geeigneter Fahrzeuge bzgl. des gegenseitigen Ladeprozesses zu ermöglichen, werden für die Vorrichtung bzgl. Koordination weitere Informationen benötigt. Entsprechend übermitteln Empfänger-Fahrzeug und Spender-Fahrzeug den maximal möglichen Ladestrom an die Vorrichtung.

Dadurch ist es der Vorrichtung möglich, sowohl kompatible Fahrzeuge auszuwählen, als auch Ladedauern abzuschätzen und an die Fahrer der Fahrzeuge zu übermitteln.

Zudem wird im Empfänger-Fahrzeug die zusätzliche Energiemenge abgeschätzt, die benötigt wird, damit das Empfänger-Fahrzeug sein Ziel bzw. die nächste geeignete Ladestation erreichen kann. Diese Informationen werden über die Vorrichtung an das Spender-Fahrzeug übertragen, und es wird mit zusätzlichen Informationen des Empfänger-Fahrzeugs (GPS Position, Ziel, Ladestand, erwarteter Energie-Verbrauch) abgeschätzt, ob die im Spende-Fahrzeug noch vorhandene Energiemenge ausreicht, um das Empfänger-Fahrzeug ausreichend zu laden und darüber hinaus das eigentliche Navigations-Ziel noch zu erreichen.

Um die Wartezeit für den Fahrer des Empfänger-Fahrzeugs so gering wie möglich zu halten bzw. die Fahrtzeit des Spender-Fahrzeugs ebenfalls minimal zu halten, ermittelt die Vorrichtung vorteilhafterweise aus den übermittelten Informationen des Empfänger-Fahrzeugs und Spender-Fahrzeugs die Entfernung von Empfänger-Fahrzeug und Spender-Fahrzeug.

Haben Spender- und Empfänger-Fahrzeuge die benötigten Informationen (aktuelle Position per GPS, benötigte Ladung, Ladefähigkeit des Fahrzeugs, Steckertyp, maximaler Ladestrom, Hersteller, Fahrzeugtyp, Stromart (Gleich- oder Wechselspannung) etc.) an die Vorrichtung übermittelt, ermittelt die Ladevorrichtung aus diesen übermittelten Informationen die Kompatibilität von Empfänger-Fahrzeug und Spender-Fahrzeug ermittelt.

Nach geeigneter Auswahl von passendem Empfänger- und Spender-Fahrzeug stellt die Vorrichtung den Kontakt zwischen geeignetem Empfänger-Fahrzeug und Spender-Fahrzeug her. Die Fahrzeuge sind somit mit der Cloud bzw. dem Cloud Service vernetzt, können aber auch über Fahrzeug-zu-Fahrzeug-Kommunikation oder dezentrale Netzwerke (z.B. Blockchain) vernetzt sein.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich. Der Schutzumfang der Erfindung definiert sich allein durch den unabhängigen Anspruch.

### Kurze Beschreibung der Zeichnungen

Es zeigen:
- Fig. 1:: ein schematisches Diagramm des erfindungsgemäßen Verfahrens.
- Fig. 2:: eine schematische Darstellung eines Spender- und eines Empfänger- Fahrzeugs

Die in den Figuren dargestellten Zeichnungen sind aus Gründen der Übersichtlichkeit nicht notwendigerweise maßstabsgetreu abgebildet. Gleiche Bezugszeichen bezeichnen im Allgemeinen gleichartige oder gleichwirkende Komponenten.

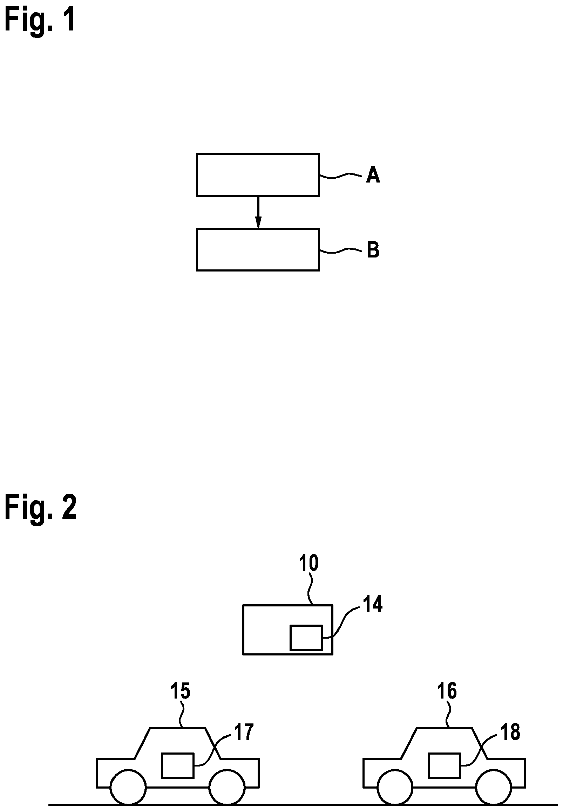

Figur 1 zeigt eine schematische Darstellung des erfindungsgemäßen Verfahrens zum Betrieb einer Vorrichtung 10 zum Laden von Energiespeichern 12 von Fahrzeugen 13, vorzugweise Elektro- oder Hybridfahrzeuge. Die Vorrichtung 10 ist mit einem internetfähigen Server 14 verbunden. In einem Verfahrensschritt A teilt ein Empfänger-Fahrzeug 15 mit einer leeren (oder teilweise geladenen) Batterie 17 seinen Lade-Bedarf der Vorrichtung 10 mit. In einem Verfahrensschritt B teilt ein Spender-Fahrzeug 16 mit zumindest teilweise geladener Batterie 18 in einem seine Lade-Bereitschaft der Vorrichtung 10 mit.

Figur 2 zeigt eine schematische Darstellung eines Spender- und eines Empfänger-Fahrzeugs. Gleiche Elemente in Bezug auf Figur 1 sind mit gleichen Bezugszeichen versehen und werden nicht näher erläutert. Bleibt ein Fahrzeug 13, 15, z.B. ein Hybrid- oder eine Elektrofahrzeug mit einer leeren Batterie 12, 17 liegen, soll die vorliegende Erfindung diesem "Empfänger-Fahrzeug" ermöglichen, ein Fahrzeug 13 bzw. Spender-Fahrzeug 16 zu finden, das dem Empfänger-Fahrzeug einen Teil seiner Ladung seiner zumindest teilweise noch geladenen Batterie 18 transferieren und somit spenden kann. Bleibt ein Empfänger-Fahrzeug 15 liegen, kommuniziert dieses mit einer Ladevorrichtung 10. Diese Vorrichtung besitzt einen internetfähigen Server 14 und verfügt über eine Cloud (Cloud Services, Cloud Computing, Connected Service). Der in der Vorrichtung 10 ablaufende Service besteht prinzipiell aus folgenden Komponenten: Das Empfänger-Fahrzeug mit leerer (oder teilweise geladener) Batterie kommuniziert den Ladebedarf über die Vorrichtung / die Cloud. Das Empfänger-Fahrzeug kann dazu selbst internetfähig sein oder es kann alternativ das Smartphone des Fahrers genutzt werden. Parallel kommunizieren mögliche Spender-Fahrzeuge ihre Ladefähigkeit bzw. Ladebereitschaft ebenfalls mit der Vorrichtung 10. In der Vorrichtung / der Cloud wird aus den der Vorrichtung 10 zur Verfügung stehenden Informationen der Fahrzeuge miteinander kompatible Fahrzeug identifiziert und zusammengebracht. Dazu unterstützt die Vorrichtung die Navigation des Spender-Fahrzeugs zum Empfänger-Fahrzeug.

Kontaktiert das Empfänger-Fahrzeug 15 mit leerer (oder teilweise geladener) Batterie die Vorrichtung 10, kann es dabei ein "Connectivity Modul" des Fahrzeugs nutzen. Dieses stellt wahlweise eine Internetverbindung mit der Vorrichtung 10 her. Alternativ kann das Empfänger-Fahrzeug 15 über das Connectivity Modul das Spender-Fahrzeug 16 auch direkt kontaktieren. Ist der Kontakt zur Vorrichtung 10 hergestellt, überträgt das Empfänger-Fahrzeug Informationen an die Ladevorrichtung. Dazu gehören unter anderem Informationen zur aktuellen Position (z.B. GPS-Koordinaten), benötigte Ladung, Ladefähigkeit des Fahrzeugs (Steckertyp, maximal möglicher Ladestrom), Hersteller, Fahrzeugtyp etc. Gleichermaßen sind mögliche Spender-Fahrzeuge ebenfalls mit der Vorrichtung 10 verbunden und übermitteln ebenfalls benötigte Informationen wie z.B. Informationen zur aktuellen Position (z.B. GPS-Koordinaten), Ladezustand, Ladefähigkeit des Fahrzeugs (Adapter- bzw. Steckertyp, maximal möglicher Ladestrom), Hersteller, Fahrzeugtyp, Stromart (Gleich- oder Wechselspannung).

Anhand von Randbedingungen wie Entfernung der Fahrzeuge voneinander, ausreichender Ladezustand des Spender-Fahrzeugs 16 oder Kompatibilität der Fahrzeuge zueinander, z.B. Spannung oder Adapter/Stecker die erfüllt sein müssen, berechnet ein Algorithmus in der Cloud oder dem Fahrzeug 15 mögliche Paarungen aus Spender- und Empfänger-Fahrzeugen 16, 15. Diese geeigneten Fahrzeuge werden über die Cloud oder Vehicle-to-Vehicle Kommunikation verbunden/kontaktiert.

In den entsprechend geeigneten Spender-Fahrzeugen 16 wird nun z.B. im Head-Display oder auf der Karte des Navigations-Systems der Lade-Bedarf-Zustand des Empfänger-Fahrzeugs angezeigt. Zusätzliche Informationen wie z.B. Umweg, benötigte Ladezeit, Fahrzeugtyp (für eine "Branded Community", z.B. Fahrer desselben Fahrzeugherstellers helfen sich gegenseitig) können ebenfalls angezeigt werden.

Fahrer der möglichen Spender-Fahrzeuge 16 können nun auswählen, ob sie dem Empfänger-Fahrzeug 15 helfen wollen oder nicht. Wenn angegeben wird, dass dem Empfänger-Fahrzeug 15 geholfen werden soll, so wird die aktuelle Route im Navigations-System geändert mit dem Empfänger-Fahrzeug 15 als Ziel, und der Fahrer des Empfänger-Fahrzeugs wird informiert, dass Hilfe unterwegs ist.

Der Dienst kann sowohl kostenlos als auch kostenpflichtig, z.B. in Einbezug eines Bezahl-Systems erfolgen. Als Spender-Fahrzeuge kommen sowohl andere Fahrer von Elektro-Fahrzeugen/PHEVs also auch spezialisierte Fahrzeuge wie z.B. extra für die Pannenhilfe vorgesehene Pannenfahrzeuge eines Dienstleisters infrage. Die Kommunikation von Empfänger-Fahrzeug zu Pannenhilfe-Fahrzeug kann ggf. auch über einen zusätzlichen Server des Pannen-Dienstleisters laufen.

## Patentansprüche

1. Verfahren zum Betrieb einer Vorrichtung (10) zum Laden von Energiespeichern (12) von Elektro- oder Hybridfahrzeugen wobei die Vorrichtung (10) mit einem internetfähigen Server (14) verbunden ist, der über einen Cloud-Service (18) verfügt, welcher die IT-Infrastruktur der Vorrichtung (10) zur Verfügung stellt, wobei
- mindestens ein Empfänger-Fahrzeug (15) mit einer leeren oder zumindest teilweise geladenen Batterie (17) in einem Verfahrensschritt (A) seinen Lade-Bedarf der Vorrichtung (10) mitteilt;
- mindestens ein Spender-Fahrzeug (16) mit zumindest teilweise geladener Batterie (18) in einem Verfahrensschritt (B) seine Lade-Bereitschaft der Vorrichtung (10) mitteill - das mindestens ein Empfänger-Fahrzeug und das mindestens ein Spender-Fahrzeug über das Internet mit dem internetfähigen Server der Vermittlungseinrichtung kommunizieren.
**dadurch gekennzeichnet, dass**
Empfänger-Fahrzeug (15) und Spender-Fahrzeug (16) den Hersteller bzw. Fahrzeugtyp an die Vorrichtung übermitteln und dass die Vorrichtung aus den übermittelten Informationen des Empfänger-Fahrzeugs und Spender-Fahrzeugs die Kompatibilität von Empfänger-Fahrzeug und Spender-Fahrzeug ermittelt.

2. Verfahren zum Betrieb einer Vorrichtung (10) nach Anspruch 1, **dadurch gekennzeichnet, dass** Empfänger-Fahrzeug (15) und Spender-Fahrzeug (16) ihre Position an die Vorrichtung übermitteln.

3. Verfahren zum Betrieb einer Vorrichtung (10) nach einem der vorhergehenden Ansprüche, **dadurch gekennzeichnet, dass** Empfänger-Fahrzeug (15) und Spender-Fahrzeug (16) die Ladefähigkeit über kompatible Steckertypen an die Vorrichtung (10) übermitteln.

4. Verfahren zum Betrieb einer Vorrichtung (10) nach einem der vorhergehenden Ansprüche, **dadurch gekennzeichnet, dass** Empfänger-Fahrzeug (15) und Spender-Fahrzeug (16) den maximal möglichen Ladestrom an die Vorrichtung übermitteln.

5. Verfahren zum Betrieb einer Vorrichtung (10) nach einem der vorhergehenden Ansprüche, **dadurch gekennzeichnet, dass** das Empfänger-Fahrzeug (15) die benötigte Energiemenge und das Spender-Fahrzeug (16) die maximal zu spendende Energiemenge an die Vorrichtung übermitteln.

6. Verfahren zum Betrieb einer Vorrichtung (10) nach einem der vorhergehenden Ansprüche, **dadurch gekennzeichnet, dass** die Vorrichtung (10) aus den übermittelten Informationen des Empfänger-Fahrzeugs (15) und Spender-Fahrzeugs (16) die Entfernung von Empfänger-Fahrzeug (15) und Spender-Fahrzeug (16) ermittelt.

7. Verfahren zum Betrieb einer Vorrichtung (10) nach einem der vorhergehenden Ansprüche, **dadurch gekennzeichnet, dass** die Vorrichtung (10) den Kontakt zwischen geeignetem Empfänger-Fahrzeug (15) und Spender-Fahrzeugs (16) herstellt.

## Claims

1. Method for operating a device (10) for charging energy stores (12) of electric or hybrid vehicles, wherein the device (10) is connected to an Internet-enabled server (14) that has a cloud service (18) that makes the IT infrastructure available to the device (10), wherein
- at least one receiver vehicle (15) with an empty or at least partly charged battery (17) communicates its charging requirement to the device (10) in one method step (A);
- at least one donor vehicle (16) with an at least partly charged battery (18) communicates its willingness to charge to the device (10) in one method step (B),
- the at least one receiver vehicle and the at least one donor vehicle communicate with the Internet-enabled server of the mediation device via the Internet, **characterized in that** the receiver vehicle (15) and the donor vehicle (16) transmit the manufacturer or vehicle type to the device
and **in that** the device determines the compatibility of the receiver vehicle and the donor vehicle from the transmitted information from the receiver vehicle and the donor vehicle.

2. Method for operating a device (10) according to Claim 1, **characterized in that** the receiver vehicle (15) and the donor vehicle (16) transmit their position to the device.

3. Method for operating a device (10) according to either of the preceding claims, **characterized in that** the receiver vehicle (15) and the donor vehicle (16) transmit the charging capability via compatible plug types to the device (10).

4. Method for operating a device (10) according to one of the preceding claims, **characterized in that** the receiver vehicle (15) and the donor vehicle (16) transmit the maximum possible charge current to the device.

5. Method for operating a device (10) according to one of the preceding claims, **characterized in that** the receiver vehicle (15) transmits the required amount of energy and the donor vehicle (16) transmits the maximum amount of energy to be donated to the device.

6. Method for operating a device (10) according to one of the preceding claims, **characterized in that** the device (10) determines the distance between the receiver vehicle (15) and the donor vehicle (16) from the transmitted information from the receiver vehicle (15) and the donor vehicle (16).

7. Method for operating a device (10) according to one of the preceding claims, **characterized in that** the device (10) establishes the contact between a suitable receiver vehicle (15) and donor vehicle (16).

## Revendications

1. Procédé permettant de faire fonctionner un dispositif (10) servant à recharger des accumulateurs d'énergie (12) de véhicule électriques ou hybrides, le dispositif (10) étant relié à un serveur (14) compatible avec internet et qui dispose d'un service de cloud (18) qui fournit l'infrastructure informatique du dispositif (10), dans lequel
- au moins un véhicule récepteur (15) pourvu d'une batterie (17) vide ou au moins partiellement chargée communique dans une étape de procédé (A) son besoin de charge au dispositif (10) ;
- au moins un véhicule donneur (16) pourvu d'une batterie (18) au moins partiellement chargée communique dans une étape de procédé (B) sa disponibilité de charge au dispositif (10) ;
- ledit au moins un véhicule récepteur et ledit au moins un véhicule donneur communiquent par internet avec le serveur compatible avec internet de l'équipement de transmission ;
**caractérisé en ce que** le véhicule récepteur (15) et le véhicule donneur (16) transmettent le constructeur ou le type de véhicule au dispositif, et **en ce que** le dispositif détermine à partir des informations transmises du véhicule récepteur et du véhicule donneur la compatibilité du véhicule récepteur et du véhicule donneur.

2. Procédé permettant de faire fonctionner un dispositif (10) selon la revendication 1, **caractérisé en ce que** le véhicule récepteur (15) et le véhicule donneur (16) transmettent leur position au dispositif.

3. Procédé permettant de faire fonctionner un dispositif (10) selon l'une quelconque des revendications précédentes, **caractérisé en ce que** le véhicule récepteur (15) et le véhicule donneur (16) transmettent la capacité de charge par des types de connecteur compatibles au dispositif (10).

4. Procédé permettant de faire fonctionner un dispositif (10) selon l'une quelconque des revendications précédentes, **caractérisé en ce que** le véhicule récepteur (15) et le véhicule donneur (16) transmettent le courant de charge maximal possible au dispositif.

5. Procédé permettant de faire fonctionner un dispositif (10) selon l'une quelconque des revendications précédentes, **caractérisé en ce que** le véhicule récepteur (15) transmet au dispositif la quantité d'énergie nécessaire, et le véhicule donneur (16) transmet au dispositif la quantité d'énergie maximale à donner.

6. Procédé permettant de faire fonctionner un dispositif (10) selon l'une quelconque des revendications précédentes, **caractérisé en ce que** le dispositif (10) détermine à partir des informations transmises du véhicule récepteur (15) et du véhicule donneur (16) la distance du véhicule récepteur (15) et du véhicule donneur (16).

7. Procédé permettant de faire fonctionner un dispositif (10) selon l'une quelconque des revendications précédentes, **caractérisé en ce que** le dispositif (10) établit le contact entre un véhicule récepteur (15) et un véhicule donneur (16) adéquats.
